(19) Europäisches Patentamt
European Patent Office
Office européen des brevets

(11) EP 2 278 140 B1

(12) EUROPEAN PATENT SPECIFICATION

(45) Date of publication and mention
of the grant of the patent:
**27.04.2016 Bulletin 2016/17**

(51) Int Cl.:
*F02D 13/02* (2006.01)  *F02D 41/00* (2006.01)
*F02D 41/18* (2006.01)  *F02D 11/10* (2006.01)

(21) Application number: **09730985.0**

(22) Date of filing: **30.03.2009**

(86) International application number:
**PCT/JP2009/001468**

(87) International publication number:
**WO 2009/125552 (15.10.2009 Gazette 2009/42)**

(54) **A CONTROL APPARATUS FOR AN INTERNAL COMBUSTION ENGINE**

STEUERUNG-VORRICHTUNG EINES VERBRENNUNGSMOTORS

DISPOSITIF DE COMMANDE DE MOTEUR A COMBUSTION INTERNE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **07.04.2008 JP 2008098951**
**05.03.2009 JP 2009052634**

(43) Date of publication of application:
**26.01.2011 Bulletin 2011/04**

(73) Proprietor: **Honda Motor Co., Ltd.**
**Minato-ku**
**Tokyo 107-8556 (JP)**

(72) Inventors:
• **TAKAMIYA, Hideharu**
**Wako-shi**
**Saitama 351-0193 (JP)**

• **ANDO, Yoshinori**
**Wako-shi**
**Saitama 351-0193 (JP)**

(74) Representative: **Weickmann & Weickmann PartmbB**
**Postfach 860 820**
**81635 München (DE)**

(56) References cited:
**EP-A1- 1 947 314      EP-A2- 1 389 673**
**EP-A2- 2 037 107      JP-A- 8 240 139**
**JP-A- 2002 188 472    JP-A- 2005 083 345**
**JP-A- 2005 083 345    US-A1- 2008 189 026**

## Description

### Technical Field

The present invention relates to an apparatus for controlling a lift amount of an intake valve of an internal combustion engine having a variable valve actuation mechanism that is capable of arbitrarily setting opening and closing characteristics of the intake valve.

### Background Art

In a recent internal combustion engine, it has been proposed to mount a variable valve actuation mechanism that is capable of arbitrarily setting opening and closing characteristics of an intake valve to control an intake air amount into the internal combustion engine. In the patent document 1 below, for an internal combustion engine comprising such a variable valve actuation mechanism, a technique is disclosed for fixing a timing of closing the intake valve in the idling operating state and controlling an intake air amount by controlling the opening degree of the throttle valve.

Patent Document 1: Japanese Patent No. 3791267

### Disclosure of the Invention

Problem to be Solved by the Invention

According to a conventional technique, even at a low load where the amount of intake air is small, problems such as a weakening in a gas flow and a slowdown in the vaporization of adhering fuel due to a closing timing control of the intake valve may be solved by controlling the opening degree of the throttle valve in the idling operating state.

However, if a period during which the intake valve is open becomes longer by fixing the opening timing of the intake valve, although the above problems regarding the adhering and vaporization may be solved, a pumping loss may be increased and a fuel consumption for achieving an output of the internal combustion engine may be increased. As a result, the fuel efficiency may be deteriorated.

Furthermore, conventionally, the lift amount of the intake valve in a low load region is generally controlled to a constant predetermined value. Such a predetermined value is set to a relative higher value in such a manner as to address various environments (for example, different atmospheric pressures and intake air temperatures). As a result, the fuel efficiency may be deteriorated depending on the vehicle's environment.

US 2008/189026 A1 discloses a control apparatus for an internal combustion engine according to the preamble of claim 1. There, the intake air amount requested by the internal combustion engine is the actual intake air amount.

The control apparatus of EP 1 947 314 A1 includes a first table defining a relation between an intake air amount and a throttle opening area under a reference condition (defined by a reference gauge pressure, a reference atmospheric pressure and a reference intake air temperature) to be used for determining a reference throttle opening area from a desired intake amount.

Therefore, a technique for controlling an intake valve without deteriorating the fuel efficiency in any environment is desired. Especially, a technique for controlling an intake valve without deteriorating the fuel efficiency in any environment, while implementing a low load operating state, is desired.

Means for Solving Problem

According to one aspect of the present invention, a control apparatus and a method according to claims 1 and 7 is provided.

For an environment condition around an internal combustion engine including at least an intake air temperature and an atmospheric pressure, a present environment condition is detected. A map indicating a relationship between an intake air amount and a lift amount of an intake valve in a standard environment condition is stored. An intake air amount requested by the internal combustion engine is determined. The requested intake air amount in the standard environment condition is corrected in such a manner as to indicate a requested intake air amount in the present environment condition. The stored map is referred to based on the corrected requested intake air amount to determine a target lift amount corresponding to the corrected requested intake air amount.

According to this invention, because a requested intake air amount is corrected according to the present environment condition, a target lift amount suitable for the present environment condition can be determined. As compared with a control for fixing the lift amount at a higher value in such a manner as to be adaptable to various environments, a pumping loss can be suppressed and a better fuel efficiency can be implemented. Furthermore, a relationship between the intake air amount and the lift amount is stored only for the standard environment condition. Storing the relationship for every different environment condition is not required. Therefore, the number of man-hours for setting data and the amount of data can be suppressed.

In one embodiment of the present invention, the above lift amount is determined in an idling operating state. Thus, because the lift amount adapted to the present environment is implemented in a low load operating region, a deterioration of the fuel efficiency can be avoided.

In one embodiment of the present invention, the above environment condition is represented by an air density (p) based on the intake air temperature and the atmospheric pressure. Thus, under various environments of different intake air temperatures and different atmospheric pressures, the lift amount adapted to each environment can be implemented.

In one embodiment of the present invention, the map stored in a storing means is referred to based on the corrected requested intake air amount and a target rotational speed (NOBJ) of the internal combustion engine to determine the target lift amount corresponding to the corrected requested intake air amount. Thus, the lift amount according to the target rotational speed can be determined.

In one embodiment of the present invention, the requested intake air amount is determined based on a load of auxiliary equipment driven by the internal combustion engine and a friction of the internal combustion engine. Thus, the intake air amount that is possibly required for the engine in the idling operating state can be determined.

In the present invention, a first operating region where an intake manifold pressure is changed according to an increase of the target intake air amount while keeping the lift amount constant, and a second operating region where the lift amount is changed according to an increase of the target intake air amount while keeping the intake manifold pressure constant at a predetermined reference gauge pressure are implemented. When the target intake air amount reaches the requested intake air amount under a predetermined reference phase, the first operating region is switched to the second operating region. The above map indicates a relationship between the intake air amount and the lift amount of the intake valve in the standard environment and the reference gauge pressure. The target lift amount is applied to the first operating region. Thus, a target lift amount that can implement the requested intake air amount under the reference gauge pressure at which the first operating region is switched to the second operating region can be determined. The requested intake air amount is an amount of air required for the internal combustion engine, and is constant independently of the environment. Therefore, in any environment, the switching from the first operating region to the second operating region can be smoothly performed at the same timing.

In one embodiment of the present invention, the detected atmospheric pressure is smoothed. The above correction is made using the smoothed atmospheric pressure. This smoothing is performed such that the smoothed atmospheric pressure used for the correction in a current cycle does not have a difference greater than or equal to a predetermined value with respect to the smoothed atmospheric pressure used for the correction in a previous cycle.

For example, if the detected atmospheric pressure abruptly changes due to, for example, a failure of a sensor for detecting the atmospheric pressure, the target lift amount may abruptly change, thereby causing the intake air amount to abruptly change. According to this invention, because the smoothing of the atmospheric pressure is performed such that a change in the atmospheric pressure used for the correction is suppressed, an abrupt change in the intake air amount can be suppressed. Therefore, an engine stall and abrupt starting can be prevented.

**Brief Description of the Drawings**

Figure 1 is a diagram showing an overall structure of an internal combustion engine and its control unit in accordance with one embodiment of the present invention;

Figure 2 shows one example of auxiliary equipment of an internal combustion engine in accordance with one embodiment of the present invention;

Figure 3 is a diagram for explaining a behavior of an intake valve and a pumping loss in accordance with one embodiment of the present invention;

Figure 4 is a diagram for explaining a control form in accordance with one embodiment of the present invention;

Figure 5 is a functional block diagram of a control apparatus in accordance with one embodiment of the present invention;

Figure 6 shows one example of an intake air amount map in accordance with one embodiment of the present invention;

Figure 7 is a flowchart of a control process in accordance with one embodiment of the present invention;

Figure 8 shows one example of an intake air amount map in accordance with one embodiment of the present invention;

Figure 9 shows a model of an intake valve in accordance with one embodiment of the present invention;

Figure 10 is a flowchart of a process for determining a transition intake air amount in accordance with one embodiment of the present invention;

Figure 11 shows one example of an intake air amount map in accordance with one embodiment of the present invention;

Figure 12 is a functional block diagram of a control apparatus in accordance with another embodiment of the present invention;

Figure 13 is a flowchart of a process for determining a smoothed atmospheric pressure in accordance with another embodiment of the present invention;

Figure 14 is a diagram for explaining a technical significance of using a smoothed atmospheric pressure in accordance with another embodiment of the present invention; and

Figure 15 is a diagram for explaining a technical significance of using a smoothed atmospheric pressure in accordance with another embodiment of the present invention.

**Best Mode for carrying out the Invention**

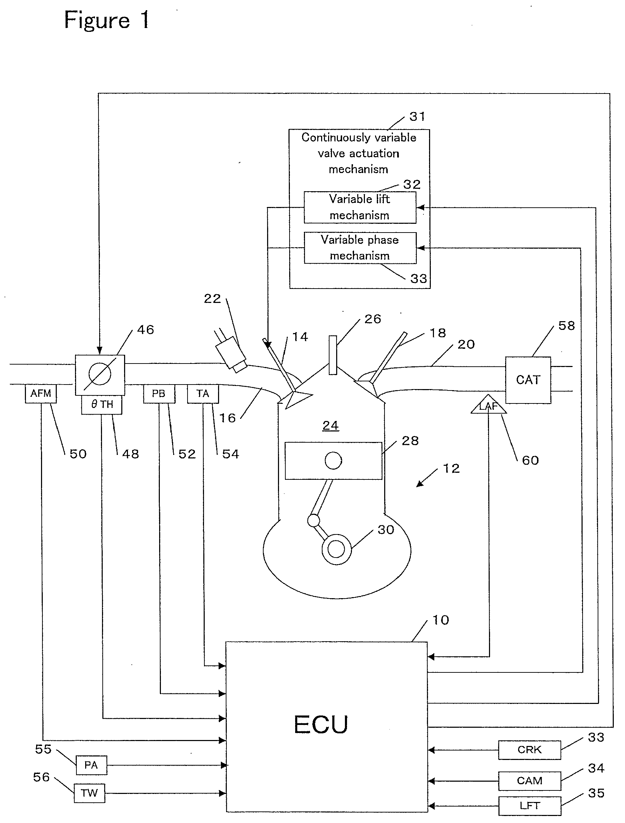

Embodiments of the present invention will be described referring to the attached drawings. Figure 1 is an overall structure of an internal combustion engine (hereinafter referred to as an engine) and its control unit in accordance with one embodiment of the present invention.

An electronic control unit (hereinafter referred to as an ECU) 10 is a computer having an input/output interface, a central processing unit (CPU) and a memory. One or more computer programs for implementing various controls for the vehicle and data required for executing the programs may be stored in the memory. One or more programs for controls according to the present invention, data and one or more maps used for executing the programs may be also stored in the memory. The ECU 10 receives data sent from each part of the vehicle via the input/output interface, carries out operations to generate control signals, and sends out the control signals for controlling each part of the vehicle via the input/output interface.

An engine 12 is, for example, a 4-cycle engine equipped with four cylinders. One of the cylinders is schematically illustrated in the figure. The engine 12 is connected to an intake manifold 16 through an intake valve 14 and connected to an exhaust manifold 20 through an exhaust valve 18. A fuel injection valve 22 for injecting fuel in accordance with a control signal from the ECU 10 is provided in the intake manifold 16. Alternatively, the fuel injection valve 22 may be provided in a combustion chamber 24.

The engine 12 introduces an air-fuel mixture of the air taken from the intake manifold 16 and the fuel injected from the fuel injection valve 22 into the combustion chamber 24. A spark plug 26 is provided in the combustion chamber 24 to ignite the spark in accordance with an ignition timing signal from the ECU 10. The air-fuel mixture combusts in response to the spark ignited by the spark plug 26. The combustion increases the volume of the air-fuel mixture to push a piston 28 downward. A reciprocal motion of the piston 28 is converted into a rotational motion of a crankshaft 30. In a case of a 4-cycle engine, a cycle of the engine includes four strokes of intake, compression, combustion and exhaust. The piston 28 travels up and down four times in one cycle.

In this embodiment, a continuously variable valve actuation mechanism 31 comprises a variable lift mechanism 32 and a variable phase mechanism 33. The variable lift mechanism 32 is a mechanism capable of continuously changing a lift amount of the intake valve 14 according to a control signal from the ECU 10. The variable lift mechanism can be implemented by any known technique. For example, a mechanism implemented with a cam, lift variable link, upper link, and lower link has been proposed (for example, see Japanese Patent Application Laid-Open No. 2004-036560). In the mechanism, the angle of the lower link is changed by, for example, an actuator to control a maximum lift amount of the valve.

The variable phase mechanism 33 continuously changes a phase of the intake valve 14 according to a control signal from the ECU 10. The variable phase mechanism can be implemented by any known technique. For example, a mechanism for electromagnetically advancing and retarding the phase of the intake valve has been proposed (for example, see Japanese Patent Application Laid-Open No. 2000-227033).

Alternatively, the variable lift mechanism and the variable phase mechanism may be integrated into a single unit. The present invention is not limited to these mechanisms that are capable of continuously changing the lift amount and the phase. The present invention is applicable to a mechanism capable of changing the lift amount and the phase in a step-by-step manner.

A crank angle sensor 33 for detecting a rotational angle of the crankshaft 30 and a cam angle sensor 34 for detecting a rotational angle of a camshaft to which a cam that drives the intake valve 14 of the engine 12 is connected are connected to the ECU 10. Detection values of these sensors are provided to the ECU 10. The crank angle sensor 33 generates one pulse (CRK pulse) every predetermined crank angle degrees (for example, 30 degrees). In response to the pulses, the rotational angle position of the crankshaft 30 can be identified. The cam angle sensor 34 generates a pulse (CYL pulse) at a predetermined crank angle position of a specific cylinder of the engine and a pulse (TDC pulse) at the top dead center (TDC) in the beginning of the intake stroke of each cylinder. These pulses are used for detecting an engine rotational speed NE and determining various control timings such as a fuel injection timing and an ignition timing.

An actual phase CAIN of the camshaft is detected from a relative relation between the TDC pulse outputted from the cam angle sensor 34 and the CRK pulse outputted from the crank angle sensor 33. In this embodiment, for the most retarded phase, the value of CAIN is set to zero. As the phase is advanced, the value of CAIN is larger.

A lift amount sensor 35 for detecting a lift amount LFT of the intake valve 14 is provided in the continuously variable valve actuation mechanism 31, and is connected to the ECU 10. The lift amount sensor 35 may be implemented by any known technique. For example, the sensor 35 may be implemented with a potentiometer. A detection value of the sensor 35 is sent to the ECU 10.

A throttle valve 46 is provided in the intake manifold 16. The throttle valve 46 is a drive-by-wire (DBW) throttle valve that is driven by an actuator (not illustrated in the figure) in accordance with a control signal from the ECU 10.

A throttle valve opening sensor 48, which is attached to the throttle valve 46, provides the ECU 10 with a signal corresponding to an opening degree TH of the throttle valve.

In this embodiment, the amount of intake air into the engine 12 is controlled by controlling the lift amount of the intake valve 14 by the continuously variable valve actuation mechanism 31 while controlling the intake manifold pressure through a control of the opening degree of the throttle valve 46.

An air flow meter 50 is provided upstream of the throttle valve 46 in the intake manifold 16. The air flow meter 50 outputs to the ECU 10 an electric signal indicating the amount of intake air.

An intake manifold pressure sensor 52 and an intake air temperature sensor 54 are provided downstream of the throttle valve 46 in the intake manifold 16 to output to the ECU 10 electric signals indicating an absolute pressure PB inside the intake manifold and a temperature TA of intake air, respectively. An atmospheric pressure sensor 55 is provided at an appropriate position outside the engine to output to the ECU 10 an electric signal indicating an atmospheric pressure PA. The intake manifold pressure can be expressed in terms of absolute pressure and gauge pressure. The gauge pressure indicates a differential pressure of the intake manifold absolute pressure PB with respect to the atmospheric pressure PA, and is represented by "PB-PA (mmHg)". Furthermore, an engine water temperature sensor 56 for detecting a water temperature TW of the engine 12 is provided to output to the ECU 10 an electrical signal indicating the water temperature of the engine.

A LAF (linear air-fuel) sensor 60 is provided upstream of a catalyst 58 in the exhaust manifold 20. The LAF sensor 60 outputs to the ECU 10 a signal that is proportional to the concentration of oxygen included in the exhaust gas over a wide range from lean to rich.

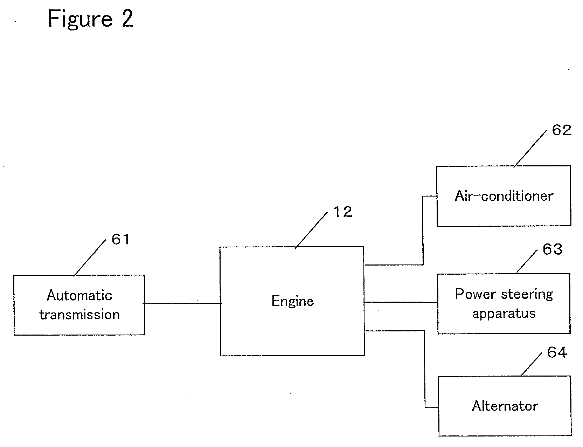

Referring to Figure 2, one example of auxiliary equipment driven by the engine 12 is shown in accordance with one embodiment of the present invention. The auxiliary equipment such as an automatic transmission 61, air-conditioner 62, power steering apparatus 63 and alternator 64 is driven by the crankshaft 30 of the engine 12. The auxiliary equipment shown in the figure is one example. Any apparatus that is mounted on the vehicle and applies load to the engine may be included in the auxiliary equipment.

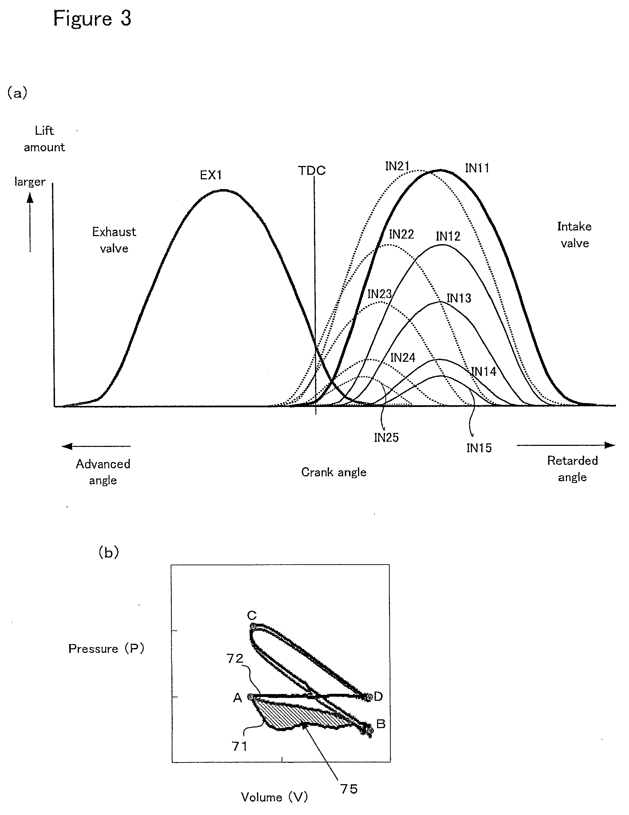

Referring to Figure 3(a), a graph for explaining a behavior of the intake valve controlled by the continuously variable valve actuation mechanism 31 is shown. The vertical axis indicates the lift amount while the horizontal axis indicates the crank angle. By the continuously variable valve actuation mechanism, the phase of the intake valve can be continuously changed while the lift amount of the intake valve can be continuously changed.

The lift amount with respect to the crank angle (referred to as operation characteristics hereinafter) of the exhaust valve is indicated by reference numeral EX1. IN11 through IN 15 shown by solid lines indicate operation characteristics under a reference phase of the intake valve. In this embodiment, the reference phase is set to a most retarded angle with respect to the TDC (compression top dead center). From IN15 to IN11, the lift amount increases. According to the operating state of the engine, the operation characteristics are switched among IN11 to IN15. IN21 through IN25 shown by dotted lines indicate operation characteristics in a state after the operation characteristics IN11 through IN15 are most advanced with respect to the TDC, respectively. As seen from the figure, in this variable valve actuation mechanism, as the lift amount is smaller, a time period during which the intake valve is open (opening time) is shorter.

Here, the fuel efficiency is discussed for, for example, IN11 and IN 15. In Figure 3(b), reference numeral 71 indicates a PV-diagram (indicating a relationship between the pressure and the volume in the combustion chamber) for IN11. Reference numeral 72 indicates a PV-diagram for IN15. At point A, the intake valve opens and the intake stroke begins. The compression stroke begins at point B. The expansion stroke begins at point C. The exhaust stroke begins at point D. From the compression to exhaust strokes, IN11 (reference numeral 71) and IN15 (reference numeral 72) present similar behaviors. However, in the intake stroke, the workload of IN11 is greater than that of IN15. A hatched region indicated by reference numeral 75 can be considered as a pumping loss. Thus, as the lift amount is smaller, the pumping loss can be more suppressed, thereby preventing a deterioration of the fuel efficiency. Therefore, especially in a low load region such as an idling operating region, it is preferable to keep the lift amount at a lower value such that the pumping loss is suppressed.

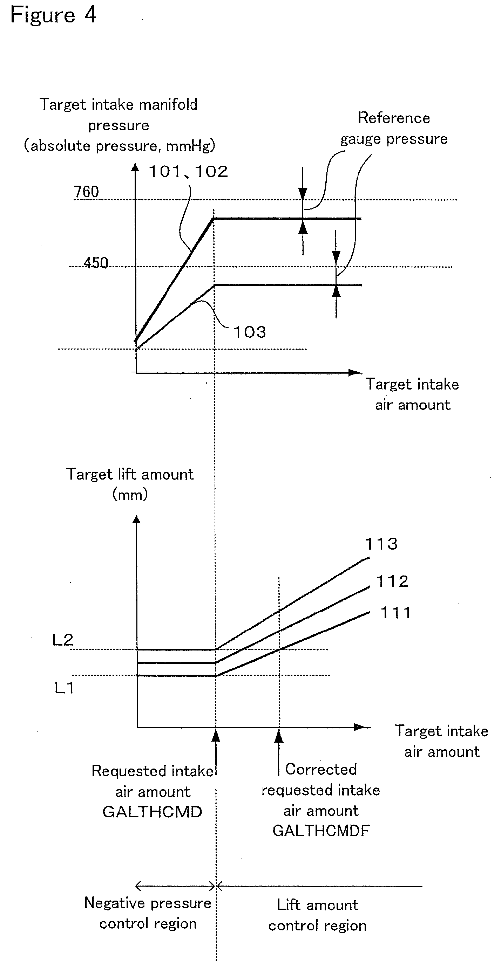

Referring to Figure 4, a control form in accordance with one embodiment of the present invention will be described. In the figure, behaviors 101-103 of a target intake manifold pressure (expressed in term of absolute pressure) and behaviors 111-113 of a target lift amount, with respect to a target intake air amount, are shown as one example. Reference numerals 101 and 111 indicate a case where the intake air temperature is 25 degrees and the atmospheric pressure is 760 mmHg. Reference numerals 102 and 112 indicate a case where the intake air temperature is 50 degrees and the atmospheric pressure is 760 mmHg. Reference numerals 103 and 113 indicate a case where the intake air temperature is 25 degrees and the atmospheric pressure is 450 mmHg. Because the reference numerals 101 and 102 present the same behavior, both are overlapped. In this embodiment, the intake air temperature of 25 degrees is a standard intake air temperature, and the atmospheric pressure of 760 mmHg is a standard atmospheric pressure. The condition of the standard intake air temperature and the standard atmospheric pressure is referred to as a standard condition (standard environment condition). Alternatively, a condition of the intake air temperature and(or) the atmospheric pressure having another value may be defined as the standard condition.

According to one embodiment of the present invention, the engine has two control regions. One is a region where the target intake air amount is lower than a predetermined value, which is referred to as a negative pressure control region. This region is a low load region, in which the idling operating state is implemented. In this region, the target intake manifold pressure is changed according to an increase of the target intake air amount while keeping the target lift amount constant. In the negative pressure control region, the overlap period (crank angle period during which both the intake valve and the exhaust valve are open) is made smaller while setting the target lift amount to a lower value so as to suppress the pumping loss.

The other is a region where the target intake air amount is higher than the predetermined value, which is referred to as a lift amount control region. In this region, the target lift amount is changed according to an increase of the target intake air amount while keeping the intake manifold pressure constant at a reference gauge pressure (for example, -100 mmHg). In this region, because the load is relatively higher, the intake air amount is controlled by the lift amount.

Here, the above predetermined value indicating a switching timing between the negative pressure control region and the lift amount control region under the reference phase is a requested intake air amount GALTHCMD, which is an amount of intake air required by the engine in a low load operation. Preferably, the requested intake air amount GALTHCMD is determined dependently on a load and friction on the engine in the idling operating state. The requested intake air amount GALTHCMD can be considered as an intake air amount purely requested by the engine, and hence is constant independently of the air density. If the target intake air amount exceeds the requested intake air amount GALTHCMD, it indicates that a load that differs from a specific load such as the auxiliary equipment and friction of the engine has occurred (for example, it indicates that an accelerator pedal has been pushed). Therefore, a transition is made to the lift amount control region where the intake air amount is controlled by the lift amount while keeping the gauge pressure constant at the reference gauge pressure.

Because the requested intake air amount GALTHCMD is preferably determined as an intake air amount to be ensured in the idling operating state as described above, the above reference phase is a predetermined phase that is set for the intake valve in the idling operating state. In the negative pressure control region, because it is preferable that the overlap period is small as described above, the value of the reference phase is set such that the overlap period becomes small (in this embodiment, the reference phase is set to the most retarded angle (zero degree)).

Focusing on the time at which the target intake air amount reaches the requested intake air amount GALTHCMD, the gauge pressure is equal to the reference gauge pressure. Because there is a correlation between the gauge pressure, intake air amount and lift amount, a lift amount required for implementing the requested intake air amount GALTHCMD under the reference gauge pressure can be determined. In the negative pressure control region, this lift amount is kept.

The requested intake air amount GALTHCMD is defined as a switching timing from the negative pressure control region to the lift amount control region in the standard condition. Therefore, if the present environment condition is the same as the standard condition, an amount of air equivalent to the requested intake air amount GALTHCMD is provided to the engine by the lift amount L1 when the target intake air amount reaches the requested intake air amount GALTHCMD, as shown by reference numeral 111. However, if the present environment condition differs from the standard condition, the lift amount L1 does not enable an amount of air equivalent to the requested intake air amount GALTHCMD to be provided to the engine. Therefore, when the present environment condition differs from the standard condition, a correction is made. A corrected requested intake air amount GALTHCMDF in a case where the environment condition is shown by reference numeral 113 (intake air temperature is 25 degrees and the atmospheric pressure is 450 mmHg) is shown in the figure. The target lift amount corresponding to the corrected requested intake air amount GALTHCMDF is L2, which can be determined from reference numeral 111 of the standard condition. Thus, in the environment condition of reference numeral 113, when the target intake air amount reaches the requested intake air amount GALTHCMD, an amount of air equivalent to the requested intake air amount GALTHCMD can be surely provided to the engine by the lift amount L2.

By setting the lift amount in the negative pressure control region in such a way, the switching from the negative pressure control region to the lift amount control region can be made at the same timing under any environment.

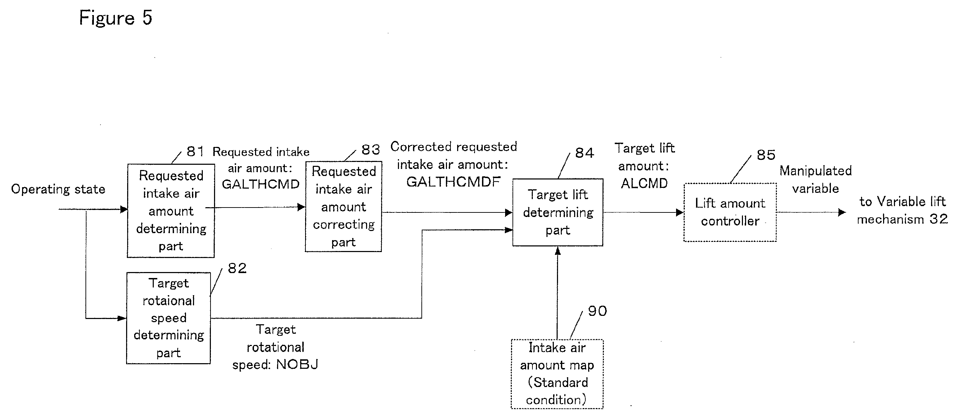

Next, referring to Figure 5, a control apparatus of the internal combustion engine in accordance with one embodiment of the present invention will be described. This control apparatus is implemented in the ECU 10 of Figure 1. More specifically, functions by each functional block are implemented by the CPU of the ECU 10.

A requested intake air amount determining part 81 determines the requested intake air amount GALTHCMD required by the engine, as described above, according to the operating state of the engine. Preferably, the requested intake air amount GALTHCMD is determined based on a maximum air amount that is possibly requested in the idling operating state. Here, the reason for using the "maximum" air amount is so as to continue the idling operating state over the negative pressure control region even if all the auxiliary equipment as shown in Figure 2 is activated and then kept in the activated state (that is, the load of the auxiliary equipment is maximum).

In this embodiment, because the auxiliary equipment as shown in Figure 2 is provided in the vehicle, the requested intake air amount GALTHCMD is determined based on a load by the auxiliary equipment and a friction of the engine that possibly occur in the idling operating state. More specifically, the requested intake air amount GALTHCMD is calculated by adding the following 1) to 5).

1) An amount of air for compensating for a load caused by the air-conditioner 62, which can be determined based on the intake air temperature TA and the engine water temperature TW detected by the intake air temperature sensor 54 and the engine water temperature sensor 56, respectively.

2) An amount of air for compensating for a load caused by the power steering apparatus 63, which can be set to a predetermined value.

3) An amount of air for compensating for a load caused by the alternator 64, which can be considered as an air amount when the energization duty of the alternator is maximized and can be previously determined by simulation or the like.

4) An amount of air for compensating for a load caused by the automatic transmission 61, which can be determined based on the intake air temperature TA and the engine water temperature TW detected by the intake air temperature sensor 54 and the engine water temperature sensor 56, respectively.

5) An amount of air for compensating for a friction of the engine, which can be determined based on the atmospheric pressure PA and the engine water temperature TW detected by the atmospheric pressure sensor 55 and the engine water temperature sensor 56, respectively.

Each of the above 1) through 5) can be determined by referring to predetermined maps (may be stored in the ECU 10). For example, as to the above 1), a correlation among the intake air temperature, engine water temperature and air amount for compensating for the load caused by the air-conditioner can be defined in a map and stored. The air amount for compensating for the load caused by the air conditioner can be determined by referring to the map based on the present intake air temperature and the present engine water temperature.

A target rotational speed determining part 82 determines a target rotational speed according to the present operating state. More preferably, a maximum target rotational speed that is possibly implemented in the idling operating state is determined as the target rotational speed. The reason for using the "maximum" rotational speed is that the idling operating state can continue over the negative pressure control region. For example, a higher one of a target rotational speed that is determined by referring to a predetermined map (which may be a map for normal operating) based on the present engine water temperature TW detected by the engine water temperature sensor 56, and a maximum target rotational speed (which may be predetermined as a predetermined value) when all the auxiliary equipment of Figure 2 is in an activated state, can be determined as the target rotational speed NOBJ.

A requested intake air amount correcting part 83 makes an air-density correction on the requested intake air amount GALTHCMD according to the environment condition. As described above, the requested intake air amount GALTHCMD is a requested intake air amount when a transition from the negative pressure control region to the lift amount control region is made under the standard condition of the standard atmospheric pressure PA_STD and the standard intake air temperature TA_STD. The correcting part 83 converts the requested intake air amount GALTHCMD under the standard condition to a requested intake air amount GALTHCMDF under the present condition with a ratio Kρ between an air density ρ_STD in the standard condition and an air density ρ in the present condition of the present atmospheric pressure PA and the present intake air temperature TA detected by the atmospheric pressure sensor 55 and the intake air temperature sensor 54, respectively.

More specifically, the air density ratio Kρ is represented as shown in the equation (1). In this embodiment, the standard atmospheric pressure PA_STD is 760 mmHg. The standard intake air temperature TA_STD is 25 degrees or 298 K (kelvin). PBGA is the reference gauge pressure, which is -100 mmHg in this embodiment (that is, lower than the atmospheric pressure by 100 mmHg). As described above, the reference gauge pressure indicates the target intake manifold pressure in the lift amount control region.

$$K\rho = \frac{\rho\_STD}{\rho} = \frac{PA\_STD + PBGA}{TA\_STD} \times \frac{TA}{PA + PBGA} \qquad (1)$$

By multiplying the requested intake air amount GALTHCMD under the standard condition by the air density ratio Kρ, the requested intake air amount GALTHMDF under the present condition is calculated (equation (2)).

$$GALTHCMDF = GALTHCMD \times K\rho$$
$$= GALTHCMD \times \frac{PA\_STD + PBGA}{PA + PBGA} \times \frac{TA}{TA\_STD} \qquad (2)$$

The corrected requested intake air amount GALTHCMDF is an amount of air for providing the requested intake air amount GALTHCMD to the engine in the present condition when the negative pressure control region is switched to the lift amount control region (that is, under the reference gauge pressure). The corrected requested intake air amount GALTHCMDF thus calculated is passed to a target lift determining part 84.

Te target lift determining part 84 determines a target lift amount in the negative pressure control region. As described above, the target lift amount is for implementing the requested intake air amount GALTHCMD in the reference gauge pressure. In order to implement the requested intake air amount GALTHCMD under the present condition, the corrected requested intake air amount GALTHCMDF is required as described above. Therefore, the target lift amount corresponding to the corrected requested intake air amount GALTHCMDF is determined.

In order to determine the target lift amount, a predetermined intake air amount map 90 is referred to. This map consists of maps defining a correlation among the intake air amount, engine rotational speed, gauge pressure of the intake manifold, phase of the intake valve, and lift amount of the intake valve in the standard condition. These maps are previously stored in a memory of the ECU 10.

The target lift determining part 84 selects, from these maps, a map corresponding to the target rotational speed NOBJ determined by the target rotational speed determining part 82, the reference gauge pressure and the reference phase. The selected map defines a relationship between the lift amount and the intake air amount when the conditions of the reference gauge pressure, reference phase and target engine rotational speed NOBJ are met under the standard condition.

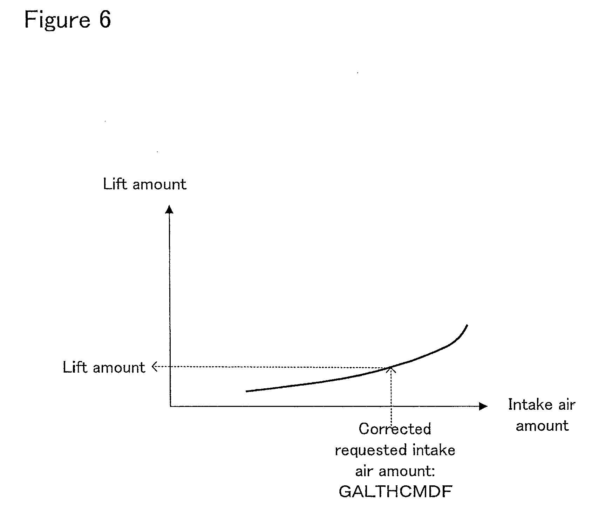

Referring to Figure 6, one example of the selected map is shown. The target lift determining part 84 refers to the map as shown in Figure 6 based on the corrected requested intake air amount GALTHCMDF to determine a corresponding lift amount ALCMD, which is the target lift amount in the negative pressure control region.

The target lift amount ALCMD is passed to a lift amount controller 85. The lift amount controller 85 can be implemented in the ECU 10 and determines a manipulated variable for causing the actual lift amount detected by the lift amount sensor 35 to converge to the target lift amount by any control method (for example, a PI control, a response assignment control, etc.). The manipulated variable is passed to the variable lift mechanism 32, which then adjusts the lift amount of the intake valve such that the target lift amount ALCMD is achieved in the negative pressure control region.

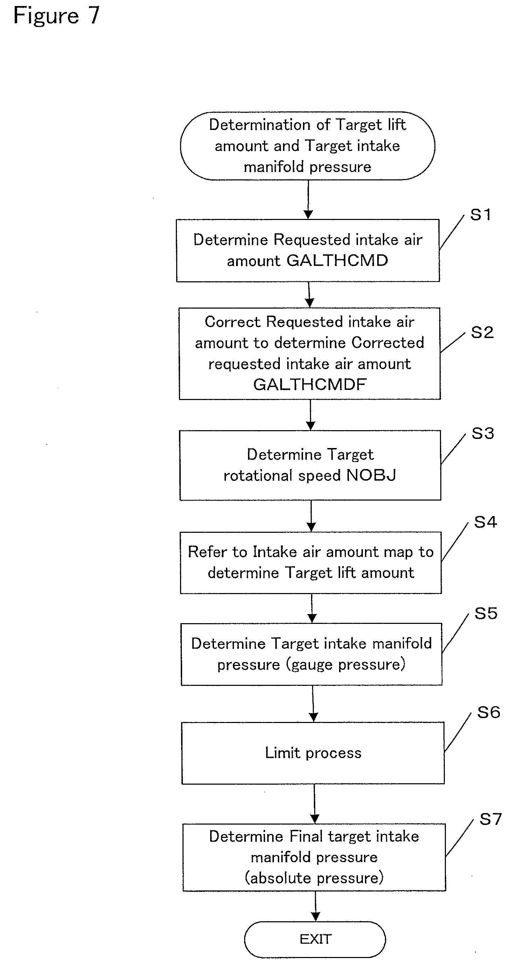

Figure 7 is a control flow of an intake air amount controlling process in the negative pressure control region in accordance with one embodiment of the present invention. This process can be performed by the CPU of the ECU 10 at predetermined time intervals (for example, in synchronization with the TDC signal).

In step S1, the requested intake air amount GALTHCMD required by the engine is determined. As described above, it is preferable that an amount of air that is possibly required by the engine in the idling operating state is determined as the requested intake air amount GALTHCMD. In such a case, the requested intake air amount GALTHCMD can be calculated by adding amounts of air for compensating for a load of the auxiliary equipment mounted on the vehicle and a friction of the engine.

In step S2, the requested intake air amount GALTHCMD is air-density-corrected according to the equation (2) described above to calculate the corrected requested intake air amount GALTHCMDF. In step S3, the target rotational speed NOBJ is determined as described above. As described above, it is preferable that the target rotational speed that is possibly required in the idling operating state is determined as the target rotational speed NOBJ.

In step S4, the intake air amount map 90 in the reference gauge pressure, the target rotational speed NOBJ and the reference phase, as shown in Figure 6, is referred to based on the corrected requested intake air amount GALTHCMDF, to determine the target lift amount ALCMD. In the negative pressure control region, the lift amount of the intake valve is kept constant at the target lift amount ALCMD. As described above, the target lift amount ALCMD is passed to the lift amount controller 85, which then controls the actual lift amount such that the actual lift amount follows the target lift amount.

In step S5, a target intake manifold pressure PBGACMDM (expressed in terms of gauge pressure) is determined. One example of this determination method is described later.

In step S6, the target intake manifold pressure PBGACMDM is limited by the reference gauge pressure to determine a final target intake manifold pressure PBGACMD. As described above, because the reference gauge pressure is a target intake manifold pressure value kept in the lift amount control region, the limit process enables the target intake manifold pressure to be controlled such that the target intake manifold is kept at the reference gauge pressure after the target intake manifold pressure reaches the reference gauge pressure at the requested intake air amount.

In step S7, the atmospheric pressure PA detected by the atmospheric pressure sensor 55 is added to the final target intake manifold pressure PBGACMD to express the final target intake manifold pressure PBGACMD in terms of absolute pressure, which is then passed to a throttle controller. Alternatively, the final target intake manifold pressure PBGACMD may be passed to the throttle controller, in which the step S7 is not required. The throttle controller (not shown in the figure) can be implemented in the ECU 10 and determines a manipulated variable for adjusting the opening degree of the throttle valve 46 by any control method (for example, a PI control, a response assignment control, etc.) so as to implement the final target intake manifold pressure. The manipulated variable is passed to a throttle actuator (not shown in the figure), which then adjusts the opening degree of the throttle valve according to the manipulated variable.

Thus, in a low load region in which the idling operating state is implemented, because the target lift amount is kept constant at a lower value as compared with a high load region, the pumping loss can be suppressed, thereby improving the fuel efficiency. Because the target lift amount is corrected according to the environment condition, the lift amount can be set to a value adapted to the environment condition where the vehicle is present, thereby improving the fuel efficiency. Only an intake air amount map for the standard condition is stored. Creating and storing maps for various environment conditions are not required. Therefore, the number of man-hours for setting data and the amount of data can be suppressed.

Here, one example of the determination method of the target intake manifold pressure in step S5 is briefly described.

As shown in Figure 4, the target intake manifold pressure PBGACMD in the negative pressure control region is represented by a first-order equation for the target intake air amount GAIRCMD. Here, "A" indicates a slope and "B" indicates an intercept.

$$PBGACMD = A \times GAIRCMD + B \qquad (3)$$

Therefore, the target intake manifold pressure PBGACMD can be calculated by determining the slope A and the intercept B.

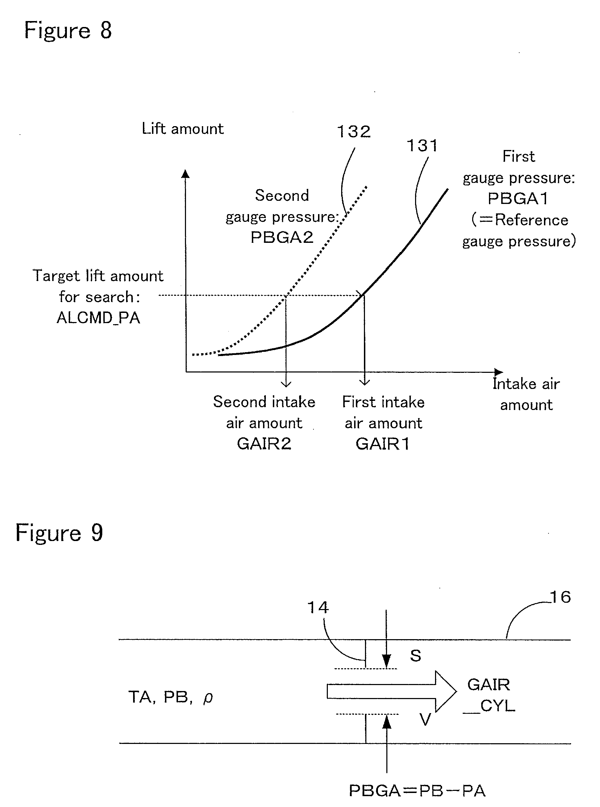

First, a method for determining the slope A is described. From the intake air amount map 90, a map corresponding to the present engine rotational speed, the present phase of the intake valve, and the reference gauge pressure (represented by PBGA1) and a map corresponding to the present engine rotational speed, the present phase of the intake valve, and a second gauge pressure (for example, -500 mmHg, represented by PBGA2) that differs from the reference gauge pressure PBGA1 are selected. One example of the selected maps is shown by reference numerals 131 and 132 in Figure 8, respectively. The two maps are referred to based on a target lift amount ALCMD_PA for search to determine a first and second intake air amounts GAIR1 and GAIR2, respectively. Here, the target lift amount ALCMD_PA for search differs from the target lift amount ALCMD kept constant in the negative pressure control region described above. This reason is described later.

Because two points on a straight line that represents the first-order equation (3), the slope A can be calculated by the following equation (4). The reason that the standard atmospheric pressure PA_STD is added is so as to convert into an absolute pressure value.

$$A = \frac{(PA\_STD + PBGA1) - (PA\_STD + PBGA2)}{(GAIR1 - GAIR2)} \qquad (4)$$

Next, the intercept B is calculated. In Figure 4, the target intake manifold pressure PBGACMD is drawn in such a manner as to reach the reference gauge pressure PBGA1 at the requested intake air amount GALTHCMD, which is a case under the reference phase (the most retarded angle in this embodiment as described above) as described above. For example, when the vehicle starts traveling after the idling operating state under the reference phase was performed in the negative pressure control region, the phase may change with respect to the reference phase. If the phase changes, the intake air amount changes. Therefore, in this embodiment, a value of the target intake air amount (referred to as a transition intake air amount GAPBPARX hereinafter) at a time at which the negative pressure control region is switched to the lift amount control region is determined considering the present phase. This determination method is described later. If the transition intake air amount GAPBPARX is determined, the intercept B can be calculated by the following equation (5) because the target intake manifold pressure PBGACMD reaches the reference gauge pressure PBGA1 at the transition intake air amount. The reason that the atmospheric pressure PA is added is so as to convert into an absolute pressure value.

$$B = (PA + PBGA1) \cdot A \times GAPBPARX \qquad (5)$$

Thus, because the above first-order equation is determined, the target intake manifold pressure PBGACMD can be calculated by the following equation (6).

$$PBGACMD = A \times GAIRCMD + B - PA \qquad (6)$$

This equation is similar to the above first-order equation (3), but the atmospheric pressure PA detected by the atmospheric pressure sensor is subtracted so as to convert into a gauge pressure value. The reason for converting into a gauge pressure value is so as to use the reference gauge pressure in the limit process of step S6 described above.

The target lift amount ALCMD_PA for search as described above is a lift amount obtained by correcting the requested intake air amount GALTHCMD with only the atmospheric pressure as shown by the following equation (7) and determining by referring to a map as shown in Figure 6 based on the requested intake air amount GALTHCMDA corrected with the atmospheric pressure. The reason for not using GALTHCMDF corrected with both the atmospheric pressure and the intake air temperature will be described.

$$GALTHCMDA = GALTHCMD \times \frac{PA\_STD + PBGA}{PA + PBGA} \qquad (7)$$

Figure 9 indicates a model of the intake valve 14. Let an opening area (which can be represented by the lift amount) of the intake valve 14 be S, through which an air flows at a flow speed V toward into the cylinder. PB is a pressure (absolute pressure) inside the intake manifold 16. TA is a temperature inside the intake manifold 16. GAIR_CYL indicates an amount of air passing through the valve 14 per unit time, which is shown by the following equation (8).

$$GAIR\_CYL = \rho \cdot V \cdot S \qquad (8)$$

On the other hand, the ideal gas equation is represented by $PB = \rho RT$ (R is a gas constant). Therefore, the equation (8) is transformed into the equation (9).

$$PB = \frac{R \cdot TA}{VS} GAIR\_CYL$$
$$GAIR\_CYL = \frac{PB}{R \cdot TA} V \cdot S \qquad (9)$$

The aim is to implement the desired GAIR_CYL by the intake manifold pressure PB and the lift amount S. Here, it is assumed that the flow speed V is constant independently of the lift amount S (in a lower lift region, because the neighborhood of the valve is choked, the flow speed can be assumed as constant at almost the velocity of sound). If the atmospheric pressure is decreased, PB is also decreased. Therefore, S needs to be increased so as to implement the desired GAIR_CYL. In other words, when the atmospheric pressure changes, S is controlled so as to implement GAIR_CYL. As a result, as shown in the negative pressure control region in Figure 4, if the atmospheric pressure becomes lower, the target intake manifold pressure is decreased while the target lift amount is increased.

On the other hand, when the intake air temperature TA becomes higher, the lift amount S needs to be increased so as to implement the desired GAIR_CYL. Therefore, as shown in Figure4, the target lift amount is increased if the intake air temperature becomes higher. As a result, because S is increased corresponding to an increased amount of TA, PB is constant. That is, the intake manifold pressure does not change. Here, it is assumed that the flow speed V is constant independently of the lift amount S as described above. Therefore, as shown by reference numerals 101 and 102 of Figure 4, the target intake manifold pressures are overlapped even if the intake air temperature changes. Thus, even if the intake air temperature changes, such change in the intake air temperature is compensated for by the lift amount, and hence the intake manifold pressure does not need to be changed. Therefore, in order to determine the target intake manifold pressure, the lift amount ALCMD_PA for search is used. The target lift amount ALCMD used for the actual lift amount control does not need to be used.

Next, a method for determining the transition intake air amount GAPBPARX as described above will be described. Under the reference phase, the requested intake air amount to be ensured at the transition is GALTHCMD as described above. A map as shown in Figure 6 is referred to based on the requested intake air amount GALTHCMD to determine a corresponding lift amount ALCMD_STD as a second lift amount for search. The second lift amount ALCMD_STD for search indicates a lift amount for achieving the reference gauge pressure under the standard condition and the reference phase.

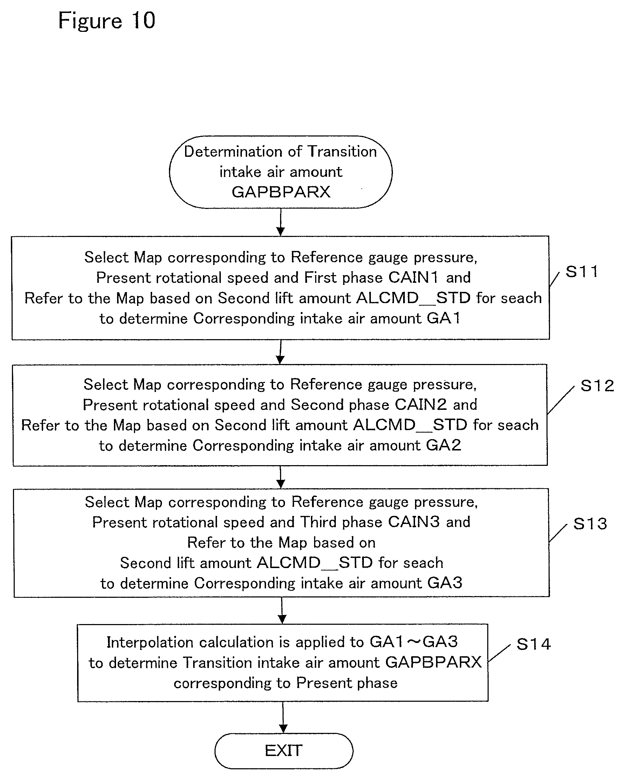

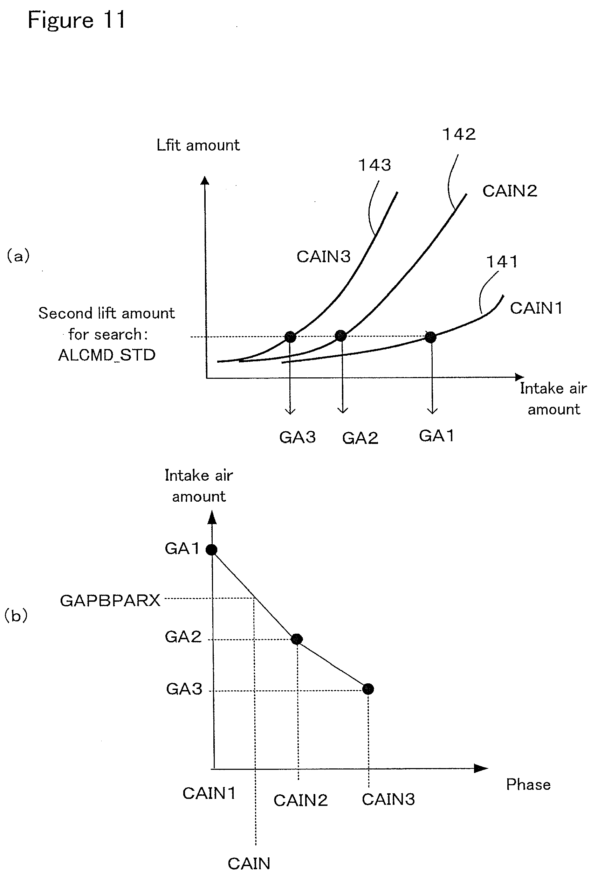

Figure 10 is a flow of a process for determining the transition intake air amount GAPBPARX corresponding to the present phase based on the second lift amount ALCMD_STD for search. In each step, map selection is made. As described above, in the intake air amount map 90 (Figure 5), an intake air amount is set for each engine rotational speed, each phase, each gauge pressure and each lift amount. If maps corresponding to the present engine rotational speed, the reference gauge pressure and the second lift amount ALCMD_STD for search are selected, the selected maps are maps where the intake air amount is set for each phase. One example of these maps are shown in Figure 11(a). In this example, for each of a first phase CAIN1 (for example, zero degree), a second phase CAIN2 (for example, 30 degrees) and a third phase CAIN3 (for example, 55 degree), a relationship between the intake air amount and the lift amount is defined.

Therefore, in step S11, a map 141 for the first phase CAIN1 is selected to determine a first intake air amount GA1 corresponding to the second lift amount ALCMD_STD for search. In step S12, a map 142 for the second phase CAIN2 is selected to determine a second intake air amount GA2 corresponding to the second lift amount ALCMD_STD for search. In step S13, a map 143 for the third phase CAIN3 is selected to determine a third intake air amount GA3 corresponding to the second lift amount ALCMD_STD for search.

As the phase is advanced, the intake air amount corresponding to the second lift amount ALCMD_SRD for search becomes smaller, and hence the transition from the negative pressure control region to the lift amount control region is made earlier.

If the intake air amounts GA1, GA2 and GA3 are plotted, Figure 11(b) is obtained. In order to determine the transition intake air amount GAPBPARX corresponding to the detected present phase CAIN, interpolation calculation is performed (S14). For example, if the present phase CAIN is between the first phase CAIN1 and the second phase CAIN2, the transition intake air amount GAPBPARX corresponding to the present phase CAIN can be calculated using the linear interpolation, as shown by the following equation (10).

$$GAPBPARX = \frac{GA1 - GA2}{CAIN1 - CAIN2} \times (CAIN - CAIN1) + GA1 \qquad (10)$$

This example uses three phase values. The number of phase values is not limited to three. Any number of phase values may be defined in the maps.

Next, another embodiment (referred to as a second embodiment) in accordance with the present invention will be described. As described referring to the equations (1) and (2), in the above embodiment (referred to as a first embodiment), the correction of the requested intake air amount is made using the detected atmospheric pressure PA. For example, if the value of the atmospheric pressure PA detected by the atmospheric pressure sensor 55 (Figure 1) abruptly changes due to a failure of the atmospheric pressure sensor 55 or the like, the corrected requested intake air amount GALTHCMDF also abruptly changes (for example, if PA changes from 460 mmHg to 760 mmHg, GALTHCMDF is increased by a factor of 760/460 (about 1.65)). As described referring to step S4 of Figure 7, the requested intake air amount GALTHCMDF is a value for searching the target lift amount ALCMD. Therefore, if the requested intake air amount GALTCHCMDF abruptly changes, the target lift amount ALCMD also abruptly changes, which may cause an engine stall and an abrupt starting and so on.

In order to prevent this, in the second embodiment described here, instead of the value PA of the atmospheric pressure detected by the atmospheric pressure sensor 55, the correction of the requested intake air amount is made with a value PAfilter obtained by smoothing the detection value PA of the atmospheric pressure.

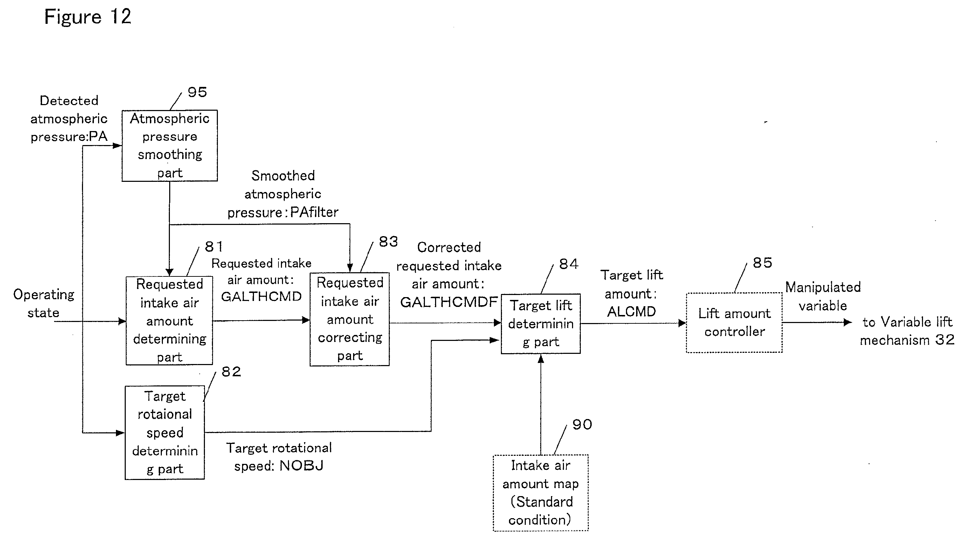

Figure 12 is a block diagram of a control apparatus for the internal combustion engine in accordance with the second embodiment of the present invention. The description for the same points as Figure 5 will be omitted, and only different points are described.

Figure 12 differs from Figure 5 in that an atmospheric pressure smoothing part 95 is provided. The atmospheric pressure smoothing part 95 smoothes the atmospheric pressure PA detected by the atmospheric pressure sensor 55 to determine a smoothed atmospheric pressure PAfilter.

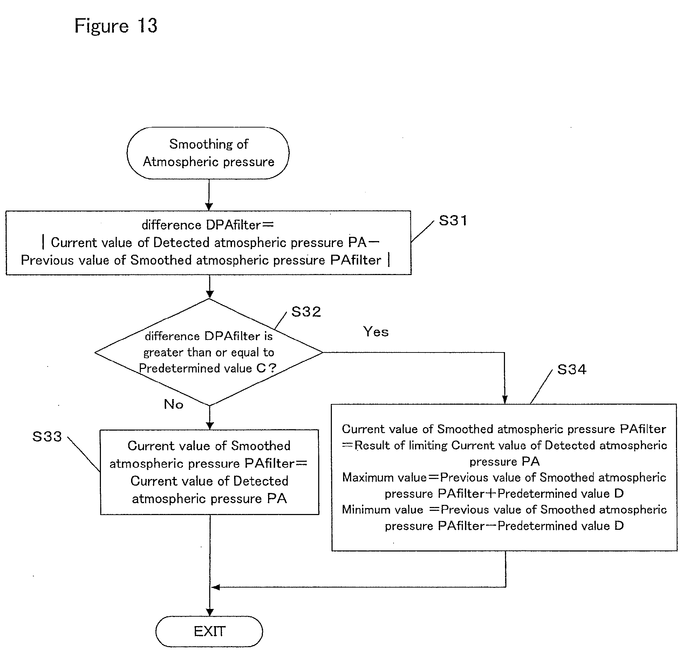

Here, referring to a flow of Figure 13, a smoothing process performed by the atmospheric pressure smoothing part 95 will be specifically described. This process is performed at predetermined time intervals. Here, the predetermined time intervals may be set in synchronization with the process of Figure 7 (as described above, if the process of Figure 7 is performed in synchronization with the TDC signal, the process of Figure 13 is also performed in synchronization with the TDC signal). Alternatively, the time intervals may be set to have a predetermined time length (for example, 200 milliseconds interval) in such a manner as to be asynchronous with the process of Figure 7.

In step S31, an absolute value DPAfilter of a difference between the current value of the atmospheric pressure PA detected by the atmospheric pressure sensor 55 and the previous value of the smoothed atmospheric pressure PAfilter is calculated. When the process is performed for the first time, the current value of the detected atmospheric pressure PA may be used as an initial value because the previous value of the smoothed atmospheric pressure PAfilter is not yet present (in this case, DPAfilter becomes zero).

In step S32, it is determined whether the difference DPAfilter is greater than or equal to a predetermined value C. If the difference DPAfilter is not greater than or equale to the predetermined value C (S32 is No), it indicates that the detected atmospheric pressure PA does not abruptly change. In step S33, the current value of the detected atmospheric pressure PA is set in the current value of the smoothed atmospheric pressure PAfilter.

If the difference DPAfilter is greater than or equal to the predetermined value C (S32 is Yes), it indicates that the detected atmospheric pressure PA abruptly changes. In step S34, the detected atmospheric pressure PA is limited. A resultant value is set in the current value of the smoothed atmospheric pressure PAfilter.

More specifically, if the detected atmospheric pressure PA exceeds a maximum value (= the previous value of the smoothed atmospheric pressure PAfilter + a predetermined value D), the maximum value is set in the smoothed atmospheric pressure PAfilter. If the detected atmospheric pressure is below a minimum value (= the previous value of the smoothed atmospheric pressure PAfilter - the predetermined value D), the minimum value is set in the smoothed atmospheric pressure PAfilter. Thus, the current value of the smoothed atmospheric pressure PAfilter is set such that this current value does not have a difference greater than the predetermined value D with respect to the previous value of the smoothed atmospheric pressure PAfilter.

The predetermined value C in step S32 may be equal to the predetermined value D in step S34.

Referring back to Figure 12, the requested intake air amount determining part 81 determines the requested intake air amount GALTHCMD according to the operating state of the engine as described above. In this regard, the smoothed atmospheric pressure PAfilter is used in place of the detected atmospheric pressure PA when an amount of air for compensating for a friction of the engine is determined as described above 5). Thus, it is prevented that the requested intake air amount GALTHCMD abruptly changes due to an abrupt change of the atmospheric pressure caused by a failure of the atmospheric pressure sensor 55 or the like.

The requested intake air amount correcting part 83 corrects the requested intake air amount GALTHCMD in a similar way to the manner as described above. In this regard, the smoothed atmospheric pressure PAfilter is used in place of the detected atmospheric pressure PA. Therefore, in place of the equations (1) and (2) as described above, the following equations (11) and (12) are used. According to these equations, the corrected requested intake air amount GALTHCMDF is calculated.

$$K\rho = \frac{\rho\_STD}{\rho} = \frac{PA\_STD + PBGA}{TA\_STD} \times \frac{TA}{PAfilter + PBGA} \qquad (11)$$

$$\begin{aligned} GALTHCMDF &= GALTHCMD \times K\rho \\ &= GALTHCMD \times \frac{PA\_STD + PBGA}{PAfilter + PBGA} \times \frac{TA}{TA\_STD} \end{aligned} \qquad (12)$$

The target lift determining part 83 determines the target lift amount ALCMD based on the corrected requested intake air amount GALTHCMDF calculated by the equation (12), in a similar way to the method as described above. Thus, in this embodiment, because the requested intake air amount GALTHCMDF is determined based on the smoothed atmospheric pressure PAfilter, it is suppressed that the corrected requested intake air amount GALTHCMDF abruptly changes, thereby suppressing an abrupt change of the target lift amount ALCMD.

The process as described referring to Figure 7 is applied to the second embodiment in a similar way. In this case, the last value of the smoothed atmospheric pressure PAfilter determined in the process of Figure 13 is used in place of the detected atmospheric pressure PA. More specifically, as described above, the smoothed atmospheric pressure PAfilter is used to determine the requested intake air amount GALTHCMD in step S1. In step S2, the smoothed atmospheric pressure PAfilter is used to correct the requested intake air amount GALTHCMD to determine the corrected requested intake air amount GALTHCMDF. In step S4, this requested intake air amount GALTHCMDF is used to determine the target lift amount ALCMD.

In the process for determining the target intake manifold pressure of step S5, the equations (5) through (7) are calculated as described above. In this regard, the smoothed atmospheric pressure PAfilter is used in place of the detected atmospheric pressure PA in these equations. In the process for determining the target intake manifold pressure of step S5, when the transition intake air amount GAPBPARX is determined, the requested intake air amount GALTHCMD determined using the smoothed atmospheric pressure PAfilter is used.

Furthermore, in step S7, the smoothed atmospheric pressure PAfilter is used in place of the detected atmospheric pressure PA when the final target intake manifold pressure PBGACMD is expressed in terms of absolute pressure.

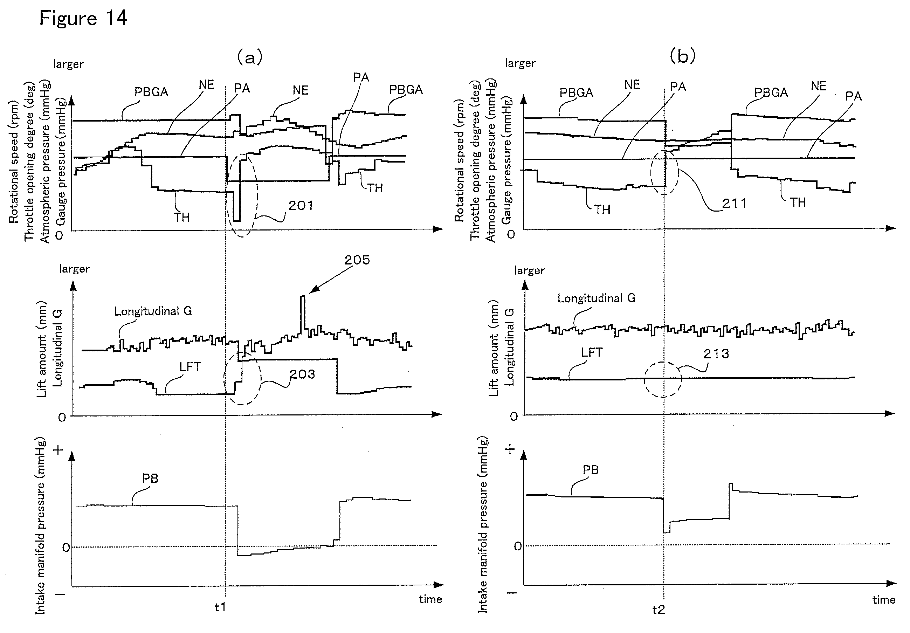

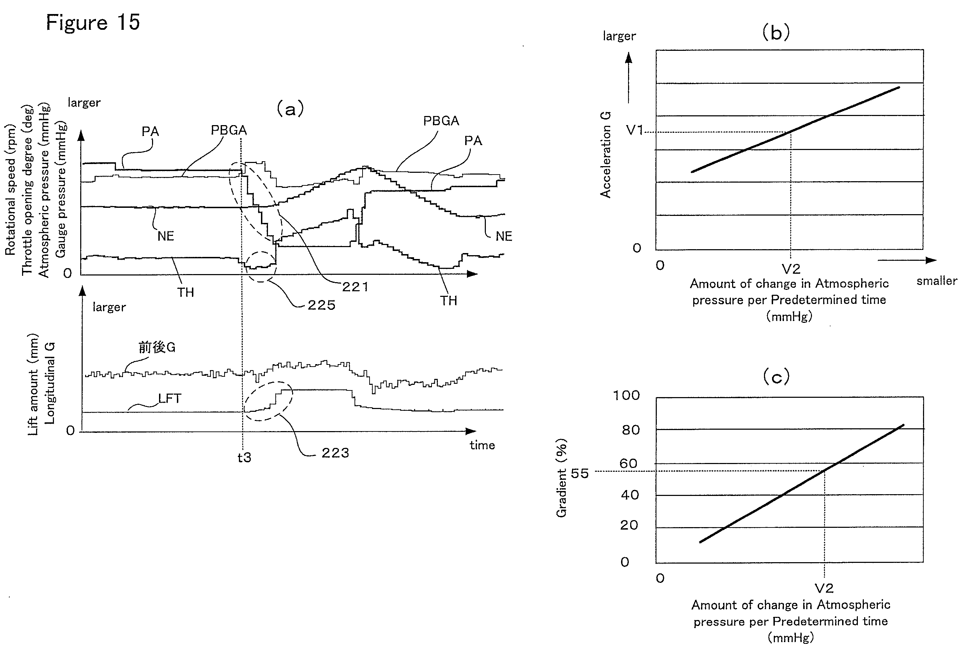

Next, referring to Figures 14 and 15, the significance and effect of using the smoothed atmospheric pressure PAFilter will be described.

In Figure 14, (a) is a diagram showing one example of a simulation result of behaviors of detection values of parameters when the detected atmospheric pressure PA abruptly changes. The time period shown in the figure for the behaviors is several seconds, which is a portion of the duration of the negative pressure control region.

As the above parameters, addition to the atmospheric pressure PA, the engine rotational speed NE, the gauge pressure PBGA, and the throttle opening degree TH are shown in the upper portion of the figure. The longitudinal G (that is, the longitudinal acceleration, which can be detected by a longitudinal acceleration sensor attached to the vehicle) and the lift amount are shown in the middle portion of the figure. The intake manifold pressure PB is shown in the lower portion in the figure.

Until time t1, the target lift amount and the target intake manifold pressure are controlled such that the predetermined requested intake air amount GALTHCMD is achieved, while the throttle opening degree TH is controlled according to the target intake manifold pressure, as described above. The atmospheric pressure PA is kept almost constant.

At time t1, the detected atmospheric pressure PA abruptly decreases due to, for example, a failure of the atmospheric pressure sensor. Because such abrupt decrease of the detected atmospheric pressure PA abruptly increases the requested intake air amount GALTHCMD, the lift amount LFT abruptly increases as shown in a region of reference numeral 203. In order to achieve the target intake manifold pressure, the throttle opening degree TH abruptly increases as shown in a region of reference numeral 201 (in this example, the throttle opening degree TH abruptly increases after decreasing). The longitudinal G increases as shown by an arrow 205 due to the increase of the lift amount LFT and the throttle opening degree TH.

Thus, because not only an increase of the throttle opening degree but also an increase of the lift amount is a factor of acceleration in response to an abrupt decrease of the detected atmospheric pressure PA, the acceleration G becomes larger, which may cause a phenomenon such as an abrupt acceleration and abrupt starting of the vehicle.

On the other hand, in order to make a comparison, (b) shows one example of a simulation result when the detected intake manifold pressure PB abruptly changes.

At time t2, the detected intake manifold pressure PB abruptly changes due to, for example, a failure of the intake manifold pressure sensor 52 (Figure 1). In order to achieve the target intake manifold pressure, the throttle opening degree TH abruptly increases as shown in a region of reference numeral 211. However, the lift amount LFT presents almost no change as shown in a region of reference numeral 213.

As shown in the above equations (1) and (2), because the detected intake manifold pressure PB is not used for correcting the requested intake air amount GALTHCMD, a change in the detected intake manifold pressure PB has almost no influence on the target lift amount ALCMD. Therefore, when the detected intake manifold pressure PB abruptly changes, only the throttle opening degree TH is a factor of acceleration. The lift amount LFT is not a factor of acceleration. As a result, changes of the longitudinal G in (b) are smaller than (a), and hence a phenomenon such as an abrupt acceleration and abrupt starting of the vehicle is hard to occur.

Although Figure 14(a) is an example where the atmospheric pressure PA abruptly decreases, the same holds true for a case where the atmospheric pressure PA abruptly increases. In this case, not only the throttle opening degree but also the lift amount is a factor of deceleration, which leads to an abrupt deceleration and may cause an engine stall.

Thus, an abrupt change of the detected atmospheric pressure PA has a larger influence on the intake air amount as compared with an abrupt change of the detected intake manifold pressure PB, and hence may cause an engine stall and abrupt starting of the vehicle. However, according to the second embodiment as described above, because the requested intake air amount is corrected using a value obtained by smoothing the detected atmospheric pressure PA, an occurrence of such a phenomenon can be prevented.

Next, referring to Figure 15, (a) shows a similar diagram to Figure 14(a), in which behaviors of parameters are shown when the atmospheric pressure is smoothed according to the second embodiment. As the parameters, the atmospheric pressure PA, engine rotational speed NE, gauge pressure PBGA, throttle opening degree TH are shown in the upper portion of the figure. The longitudinal G and the lift amount LFT are shown in the lower portion of the figure.

At time t3, the detected atmospheric pressure PA starts to decrease due to, for example, a failure of the atmospheric pressure sensor 55. Because the atmospheric pressure is smoothed, the atmospheric pressure does not abruptly change. As shown in a region of reference numeral 221, the atmospheric pressure gradually changes such that a change per predetermined time interval does not exceed a predetermined value.

Because the atmospheric pressure gradually decreases, the lift amount LFT increases gradually, not abruptly, as shown in a region of reference numeral 223. An abrupt change of the throttle opening degree TH is also suppressed as shown in a region of reference numeral 225. Therefore, an abrupt increase of the intake air amount is prevented, and an abrupt change of the longitudinal G is suppressed.

Here, in order to prevent a phenomenon such as an abrupt starting of the vehicle, it is discussed to what degree a change per predetermined time in the atmospheric pressure is preferably suppressed in the smoothing process of the atmospheric pressure.

(b) shows a result of examining a relationship between the acceleration G and the amount of change per predetermined time in the atmospheric pressure (mmHg) by a simulation or the like. The amount of change is represented by a negative value. Its absolute value (magnitude) is larger to the right. The "predetermined time" in this graph corresponds to each time interval at which the smoothing process of the atmospheric pressure PA described referring to Figure 13 is performed, and is 200 milliseconds in this example.

As seen from this graph, in order to make the acceleration G lower than a predetermined value V1, the amount of change per predetermined time of the atmospheric pressure needs to be limited within a magnitude of a predetermined value V2 corresponding to the predetermined value V1. Here, the predetermined value V1 of the acceleration G is selected as a value representing a moderate acceleration without making a driver feel incongruous (for example, a value less than or equal to 0.5 G).

On the other hand, (c) shows a result of examining a relationship between a gradient of the travel path and the amount of change per predetermined time of the atmospheric pressure by simulation or the like when the vehicle speed is 100 km/h. According to this result, the case where the amount of change per predetermined time of the atmospheric pressure is the predetermined value V2 (in this example, -50 mmHg) in (b) is equivalent to a case where the vehicle travels on a path having a rising gradient of about 55% (about 29 degrees) at a speed of 100 km/h. In general, there is almost no path having a gradient greater than 30% (for example, "Iroha" slope in Japan has a gradient of about 13.4%). Therefore, although the predetermined value V1 of the acceleration G represents a moderate acceleration, the value V1 is sufficient for a normal travel. Limiting the magnitude of the amount of change per predetermined time of the atmospheric pressure within the predetermined value V2 is not inconvenient for a normal travel.

In summary, smoothing the atmospheric pressure is preferably performed in such a manner as to be within a range of the amount of change per predetermined time of the atmospheric pressure that corresponds to a value of the acceleration G selected as described above and is not inconvenient for a normal travel. In this case, the predetermined value D in step S34 of the process of Figure 13 is set to a magnitude (absolute value) of the amount of change per predetermined time of the atmospheric pressure corresponding to the value of the acceleration G thus selected. Thus, even if the detected atmospheric pressure PA abruptly changes, a moderate acceleration is made without making a driver feel incongruous. An abrupt acceleration can be avoided

Because the above magnitude of the amount of change per predetermined time of the atmospheric pressure depends on the length of the predetermined time, it is preferable that this magnitude is adjusted according to the length of the predetermined time.

Although Figure 15 relates to the acceleration G, the same holds true for the deceleration G. By limiting the amount of change per predetermined time of the atmospheric pressure within a range below a predetermined value, the deceleration G can be suppressed, thereby preventing an occurrence such as an abrupt deceleration and an engine stall.

The present invention should not be limited to the foregoing description of the embodiment and may be taken into practice by adding various modifications to the foregoing embodiment without departing from the appended claims.

## Claims

1. A control apparatus for an internal combustion engine (12) having a variable valve actuation mechanism (31) that is capable of arbitrarily setting opening and closing characteristics of an intake valve (14), comprising:

    for an environment condition (PA, TA) around the internal combustion engine including at least an atmospheric pressure (PA), detecting means (54, 55) for detecting a present environment condition;
    storing means for storing a map (90) indicating a relationship between an intake air amount and a lift amount of the intake valve in a standard environment condition (PA_STD, TA_STD);
    means (81) for determining an intake air amount (GALTHCMD) requested by the internal combustion engine in a low load operation thereof;
    correcting means (83) for correcting the requested intake air amount in the standard environment condition in such a manner as to indicate a requested intake air amount in the present environment condition; and
    means (84) for referring to the stored map (90) based on the corrected requested intake air amount (GALTHCMDF) to determine a target lift amount (ALCMD) corresponding to the corrected requested intake air amount, **characterized in that** a first operating region where an intake manifold pressure (PB) is changed according to an increase of a target intake air amount while keeping the lift amount constant, and a second operating region where the lift amount is changed according to an increase of the target intake air amount while keeping the intake manifold pressure constant at a predetermined reference gauge pressure are implemented,

wherein, when the target intake air amount reaches the requested intake air amount under a predetermined reference phase, the first operating region is switched to the second operating region,

wherein the map (90) indicates a relationship between the intake air amount and the lift amount of the intake valve in the standard environment and the reference gauge pressure,

wherein the target lift amount is applied to the first operating region.

2. The control apparatus of claim 1, wherein the target lift amount is determined in an idling operating state.

3. The control apparatus of claim 1 or 2, wherein the environment condition is represented by an air density based on the intake air temperature (TA) and the atmospheric pressure (PA).

4. The control apparatus of any one of claims 1 through 3, wherein the map (90) stored in the storing means is referred to based on the corrected requested intake air amount (GALTHCMDF) and a target rotational speed (NOBJ) of the internal combustion engine to determine the target lift amount corresponding to the corrected requested intake air amount.

5. The control apparatus of any one of claims 1 through 4, wherein the requested intake air amount (GALTHCMDF) is determined based on a load of auxiliary equipment driven by the internal combustion engine (12) and a friction of the internal combustion engine.

6. The control apparatus of any one of claims 1 through 5, further comprising means for smoothing the atmospheric pressure (PA) detected by the detecting means (55),

wherein the correcting means makes the correction using the smoothed atmospheric pressure,

wherein the smoothing is performed such that the smoothed atmospheric pressure used by the correcting means in a current cycle does not have a difference greater than or equal to a predetermined value with respect to the smoothed atmospheric pressure used by the correcting means in a previous cycle.

7. A method for controlling an internal combustion engine (12) having a variable valve actuation mechanism (31) that is capable of arbitrarily setting opening and closing characteristics of an intake valve (14), wherein, for an environment condition (PA, TA) around the internal combustion engine including at least an atmospheric pressure (PA), a map (90) indicating a relationship between an intake air amount and a lift amount of an intake valve in a standard environment condition (PA_STD, TA_STD) is previously stored,

comprising the steps of:

detecting a present environment condition (PA, TA);

determining an intake air amount (GALTHCMD) requested by the internal combustion engine in a low load operation thereof;

correcting the requested intake air amount in the standard environment condition in such a manner as to indicate a requested intake air amount in the present environment condition; and

referring to the stored map (90) based on the corrected requested intake air amount (GALTHCMDF) to determine a target lift amount (ALCMD) corresponding to the corrected requested intake air amount, **characterized in that** a first operating region where an intake manifold pressure (PB) is changed according to an increase of the target intake air amount while keeping the lift amount constant, and a second operating region where the lift amount is changed according to an increase of the target intake air amount while keeping the intake manifold pressure constant at a predetermined reference gauge pressure are implemented,

wherein, when the target intake air amount reaches the requested intake air amount under a predetermined reference phase, the first operating region is switched to the second operating region,

wherein the map (90) indicates a relationship between the intake air amount and the lift amount of the intake valve in the standard environment and the reference gauge pressure,

wherein the target lift amount is applied to the first operating region.

8. The method of claim 7, wherein the target lift amount is determined in an idling operating state.

9. The method of claim 7 or 8, wherein the environment condition is represented by an air density based on the intake air temperature (TA) and the atmospheric pressure (PA).

10. The method of any one of claims 7 through 9, wherein the stored map (90) is referred to based on the corrected requested intake air amount (GALTHCMDF) and a target rotational speed (NOBJ) of the internal combustion engine to determine the target lift amount corresponding to the corrected requested intake air amount.

11. The method of any one of claims 7 through 10, wherein the requested intake air amount (GALTHCMDF) is determined based on a load of auxiliary equipment driven by the internal combustion engine (12) and a friction of the internal combustion engine.

12. The method of any one of claims 7 through 11, further comprising the step of smoothing the atmospheric pressure (PA) detected by the step of detecting,
wherein the step of correcting makes the correction using the smoothed atmospheric pressure,
wherein the step of smoothing is performed such that the smoothed atmospheric pressure used by the step of correcting in a current cycle does not have a difference greater than or equal to a predetermined value with respect to the smoothed atmospheric pressure used by the step of correcting in a previous cycle.

**Patentansprüche**

1. Steuervorrichtung für ein Verbrennungsmotor (12), der einen variablen Ventilbetätigungsmechanismus (31) aufweist, der in der Lage ist, Öffnungs- und Schließcharakteristiken eines Einlassventils (14) beliebig einzustellen, wobei sie aufweist:

ein Erfassungsmittel (54, 55) zum Erfassen eines gegenwärtigen Umgebungszustands für einen Umgebungszustand (PA, TA) um den Verbrennungsmotor herum einschließlich zumindest eines Atmosphärendrucks (PA);
ein Speichermittel zum Speichern eines Kennfelds (90), das eine Beziehung zwischen einer Einlassluftmenge und einem Hubbetrag des Einlassventils in einem Standardumgebungszustand (PA_STD, TA_STD) angibt;
ein Mittel (81) zum Bestimmen einer Einlassluftmenge (GALTHCMD), die vom Verbrennungsmotor in dessen Niederlassbetriebszustand angefordert wird;
ein Korrekturmittel (83) zum Korrigieren der angeforderten Einlassluftmenge in dem Standardumgebungszustand derart, um eine angeforderte Einlassluftmenge im gegenwärtigen Umgebungszustand anzugeben; und
ein Mittel (84) zum Bezugnehmen auf das gespeicherte Kennfeld (90) basierend auf der korrigierten angeforderten Einlassluftmenge (GALTHCMDF) zur Bestimmung eines Sollhubbetrags (ALCMD) entsprechend der korrigierten geforderten Einlassluftmenge,
**dadurch gekennzeichnet, dass** ein erster Betriebsbereich, wo ein Einlasskrümmerdruck (PB) gemäß einer Zunahme einer Solleinlassluftmenge geändert wird, während der Hubbetrag konstant gehalten wird,
und ein zweiter Betriebsbereich, wo der Hubbetrag gemäß einer Zunahme der Solleinlassluftmenge geändert wird, während der Einlasskrümmerdruck konstant auf einem vorbestimmten Referenzmessdruck gehalten wird, implementiert sind,
wobei, wenn die Solleinlassluftmenge die angeforderte Einlassluftmenge unter einer vorbestimmten Referenzphase erreicht, der erste Betriebsbereich zum zweiten Betriebsbereich geschaltet wird,
wobei das Kennfeld (90) eine Beziehung zwischen der Einlassluftmenge und dem Hubbetrag des Einlassventils in der Standardumgebung und dem Referenzmessdruck angibt,
wobei der Sollhubbetrag auf den ersten Betriebsbereich angewendet wird.

2. Die Steuervorrichtung von Anspruch 1, wobei der Sollhubbetrag im Leerlaufbetriebszustand bestimmt wird.

3. Die Steuervorrichtung nach Anspruch 1 oder 2, wobei der Umgebungszustand durch eine Luftdichte basierend auf der Einlasslufttemperatur (TA) und dem Atmosphärendruck (PA) repräsentiert wird.

4. Die Steuervorrichtung von einem der Ansprüche 1 bis 3, wobei auf das im Speichermittel gespeicherte Kennfeld (90) basierend auf der korrigierten angeforderten Einlassluftmenge (GALTHCMDF) und einer Solldrehzahl (NOBJ) des Verbrennungsmotors Bezug genommen wird, um den Sollhubbetrag entsprechend der korrigierten angeforderten Einlassluftmenge zu bestimmen.

5. Die Steuervorrichtung von einem der Ansprüche 1 bis 4, wobei die angeforderte Einlassluftmenge (GALTHCMDF) basierend auf einer Last eines von dem Verbrennungsmotor (12) angetriebenen Hilfsgeräts und einer Reibung des Verbrennungsmotors bestimmt wird.

6. Die Steuervorrichtung von einem der Ansprüche 1 bis 5, die ferner ein Mittel zum Glätten des vom Erfassungsmittel (55) erfassten Atmosphärendrucks (PA) aufweist, wobei das Korrekturmittel die Korrektur unter Verwendung des geglätteten Atmosphärendrucks durchführt, wobei das Glätten derart erfolgt, dass der geglättete Atmosphärendruck, der vom Korrekturmittel im gegenwärtigen Zyklus verwendet wird, keine Differenz hat, die größer als oder gleich einem vorbestimmten Wert in Bezug auf den geglätteten Atmosphärendruck ist, der vom Korrekturmittel in einem vorherigen Zyklus verwendet wurde.

7. Verfahren zum Steuern/Regeln eines Verbrennungsmotors (12), der einen variablen Ventilbetätigungsmechanismus (31) aufweist, der in der Lage ist, Öffnungs- und Schließcharakteristiken eines Einlassventils (14) beliebig einzustellen, wobei für einen Umgebungszustand (PA, TA) um den Verbrennungsmotor herum einschließlich von zumindest einem Atmosphärendruck (PA), vorab ein Kennfeld (90) gespeichert wird, das eine Beziehung zwischen einer Einlassluftmenge und einem Hubbetrag eines Einlassventils in einem Standardumgebungszustand (PA_STD, TA_STD) angibt, wobei es die Schritte aufweist:

   Erfassen eines gegenwärtigen Umgebungszustands (PA, TA);
   Bestimmen einer Einlassluftmenge (GALTHCMD), die vom Verbrennungsmotor in dessen Niederlassbetriebszustand angefordert wird;
   Korrigieren der angeforderten Einlassluftmenge in dem Standardumgebungszustand derart, um eine angeforderte Einlassluftmenge im gegenwärtigen Umgebungszustand anzugeben; und
   Bezugnehmen auf das gespeicherte Kennfeld (90) basierend auf der korrigierten angeforderten Einlassluftmenge (GALTHCMDF) zur Bestimmung eines Sollhubbetrags (ALCMD) entsprechend der korrigierten geforderten Einlassluftmenge,
   **dadurch gekennzeichnet, dass** ein erster Betriebsbereich, wo ein Einlasskrümmerdruck (PB) gemäß einer Zunahme einer Solleinlassluftmenge geändert wird, während der Hubbetrag konstant gehalten wird, und ein zweiter Betriebsbereich, wo der Hubbetrag gemäß einer Zunahme der Solleinlassluftmenge geändert wird, während der Einlasskrümmerdruck konstant auf einem vorbestimmten Referenzmessdruck gehalten wird, implementiert sind,
   wobei, wenn die Solleinlassluftmenge die angeforderte Einlassluftmenge unter einer vorbestimmten Referenzphase erreicht, der erste Betriebsbereich zum zweiten Betriebsbereich geschaltet wird,
   wobei das Kennfeld (90) eine Beziehung zwischen der Einlassluftmenge und dem Hubbetrag des Einlassventils in der Standardumgebung und dem Referenzmessdruck angibt,
   wobei der Sollhubbetrag auf den ersten Betriebsbereich angewendet wird.

8. Das Verfahren von Anspruch 7, wobei der Sollhubbetrag im Leerlaufbetriebszustand bestimmt wird.

9. Das Verfahren von Anspruch 7 oder 8, wobei der Umgebungszustand durch eine Luftdichte basierend auf der Einlasslufttemperatur (TA) und dem Atmosphärendruck (PA) repräsentiert wird.

10. Das Verfahren von einem der Ansprüche 7 bis 9, wobei auf das im Speichermittel gespeicherte Kennfeld (90) basierend auf der korrigierten angeforderten Einlassluftmenge (GALTHCMDF) und einer Solldrehzahl (NOBJ) des Verbrennungsmotors Bezug genommen wird, um den Sollhubbetrag entsprechend der korrigierten angeforderten Einlassluftmenge zu bestimmen.

11. Das Verfahren von einem der Ansprüche 7 bis 10, wobei die angeforderte Einlassluftmenge (GALTHCMDF) basierend auf einer Last eines von dem Verbrennungsmotor (12) angetriebenen Hilfsgeräts und einer Reibung des Verbrennungsmotors bestimmt wird.

12. Das Verfahren von einem der Ansprüche 7 bis 11, das ferner den Schritt aufweist, den vom Erfassungsschritt erfassten Atmosphärendruck (PA) zu glätten, wobei der Korrekturschritt die Korrektur unter Verwendung des geglätteten Atmosphärendrucks durchführt, wobei der Glättungsschritt derart erfolgt, dass der geglättete Atmosphärendruck, der vom Korrekturschritt im gegenwärtigen Zyklus verwendet wird, keine Differenz hat, die größer als oder gleich einem vorbestimmten Wert in Bezug auf den geglätteten Atmosphärendruck ist, der vom Korrekturmittel in einem vorherigen Zyklus verwendet wurde.

**Revendications**

1. Dispositif de commande d'un moteur à combustion interne (12) ayant un mécanisme d'actionnement de soupape variable (31) qui est capable de régler arbitrairement les caractéristiques d'ouverture et de fermeture d'une soupape d'admission (14), comprenant :

pour une condition environnementale (PA, TA) autour du moteur à combustion interne comprenant au moins une pression atmosphérique (PA), des moyens de détection (54, 55) pour détecter une condition environnementale présente ;

des moyens de stockage pour stocker une carte (90) indiquant un rapport entre une quantité d'air d'admission et une valeur de levée de la soupape d'admission dans une condition environnementale normale (PA_STD, TA_STD) ;

des moyens (81) pour déterminer une quantité d'air d'admission (GALTHCMD) requise par le moteur à combustion interne dans un fonctionnement de celui-ci à faible charge ;

des moyens de correction (83) pour corriger la quantité d'air d'admission requise dans la condition environnementale normale de manière à indiquer une quantité d'air d'admission requise dans la condition environnementale présente ; et

des moyens (84) pour se reporter à la carte stockée (90) basée sur la quantité d'air d'admission requise corrigée (GALTHCMDF) afin de déterminer une valeur de levée cible (ALCMD) correspondant à la quantité d'air d'admission requise corrigée,

**caractérisé en ce qu'**une première zone de fonctionnement où une pression du collecteur d'admission (PB) est modifiée selon une augmentation d'une quantité d'air d'admission cible tout en maintenant constante la valeur de levée, et une deuxième zone de fonctionnement où la valeur de levée est modifiée selon une augmentation de la quantité d'air d'admission cible tout en maintenant constante la pression du collecteur d'admission à une pression relative de référence prédéterminée, sont mises en oeuvre,

dans lequel lorsque la quantité d'air d'admission cible atteint la quantité d'air d'admission requise selon une phase de référence prédéterminée, la première zone de fonctionnement est commutée vers la deuxième zone de fonctionnement,

dans lequel la carte (90) indique un rapport entre la quantité d'air d'admission et la valeur de levée de la soupape d'admission dans l'environnement normal et la pression relative de référence,

dans lequel la valeur de levée cible est appliquée à la première zone de fonctionnement.

2. Appareil de commande selon la revendication 1, dans lequel la valeur de levée cible est déterminée dans un état de fonctionnement à vide.

3. Appareil de commande selon la revendication 1 ou 2, dans lequel la condition environnementale est représentée par une densité d'air basée sur la température de l'air d'admission (TA) et la pression atmosphérique (PA).

4. Appareil de commande selon l'une quelconque des revendications 1 à 3, dans lequel il est renvoyé à la carte (90) stockée dans les moyens de stockage en se fondant sur la quantité d'air d'admission requise corrigée (GALTHCMDF) et sur une vitesse de rotation cible (NOBJ) du moteur à combustion interne pour déterminer la valeur de levée cible correspondant à la quantité d'air d'admission requise corrigée.

5. Appareil de commande selon l'une quelconque des revendications 1 à 4, dans lequel la quantité d'air d'admission requise (GALTHCMDF) est déterminée en se fondant sur une charge d'équipement auxiliaire entraîné par le moteur à combustion interne (12) et un frottement du moteur à combustion interne.

6. Appareil de commande selon l'une quelconque des revendications 1 à 5, comprenant en outre des moyens pour lisser la pression atmosphérique (PA) détectée par les moyens de détection (55),

dans lequel les moyens de correction effectuent la correction en utilisant la pression atmosphérique lissée,

dans lequel le lissage est réalisé de telle sorte que la pression atmosphérique lissée, utilisée par les moyens de correction dans un cycle courant n'a pas une différence supérieure ou égale à une valeur prédéterminée par rapport à la pression atmosphérique lissée utilisée par les moyens de correction dans un cycle précédent.

7. Procédé pour commander un moteur à combustion interne (12) ayant un mécanisme d'actionnement de soupape variable (31) qui est capable de régler arbitrairement les caractéristiques d'ouverture et de fermeture d'une soupape d'admission (14), dans lequel, pour une condition environnementale (PA, TA) autour du moteur à combustion interne comprenant au moins une pression atmosphérique (PA), une carte (90) indiquant un rapport entre une quantité d'air d'admission et une valeur de levée d'une soupape d'admission dans une condition environnementale normale (PA_STD, TA_STD) est préalablement stockée, comprenant les étapes de :

détection d'une condition environnementale présente (PA, TA) ;
détermination d'une quantité d'air d'admission (GALTHCMD) requise par le moteur à combustion interne dans un fonctionnement de celui-ci à faible charge ;
correction de la quantité d'air d'admission requise dans la condition environnementale normale de manière à indiquer une quantité d'air d'admission requise dans la condition environnementale présente ; et
référence à la carte stockée (90) basée sur la quantité d'air d'admission requise corrigée (GALTHCMDF) afin de déterminer une valeur de levée cible (ALCMD) correspondant à la quantité d'air d'admission requise corrigée, **caractérisé en ce qu'**une première zone de fonctionnement où une pression du collecteur d'admission (PB) est modifiée selon une augmentation d'une quantité d'air d'admission cible tout en maintenant constante la valeur de levée, et une deuxième zone de fonctionnement où la valeur de levée est modifiée selon une augmentation de la quantité d'air d'admission cible tout en maintenant constante la pression du collecteur d'admission à une pression relative de référence prédéterminée, sont mises en oeuvre,

dans lequel, lorsque la quantité d'air d'admission cible atteint la quantité d'air d'admission requise selon une phase de référence prédéterminée, la première zone de fonctionnement est commutée vers la deuxième zone de fonctionnement,
dans lequel la carte (90) indique un rapport entre la quantité d'air d'admission et la valeur de levée de la soupape d'admission dans l'environnement normal et la pression relative de référence,
dans lequel la valeur de levée cible est appliquée à la première zone de fonctionnement.

8. Procédé selon la revendication 7, dans lequel la valeur de levée cible est déterminée dans un état de fonctionnement à vide.

9. Procédé selon la revendication 7 ou 8, dans lequel la condition environnementale est représentée par une densité d'air basée sur la température de l'air d'admission (TA) et la pression atmosphérique (PA).

10. Procédé selon l'une quelconque des revendications 7 à 9, dans lequel il est renvoyé à la carte stockée (90) basée sur la quantité d'air d'admission requise corrigée (GALTHCMDF) et sur une vitesse de rotation cible (NOBJ) du moteur à combustion interne pour déterminer la valeur de levée cible correspondant à la quantité d'air d'admission requise corrigée.

11. Procédé selon l'une quelconque des revendications 7 à 10, dans lequel la quantité d'air d'admission requise (GALTHCMDF) est déterminée en se fondant sur une charge d'équipement auxiliaire entraîné par le moteur à combustion interne (12) et un frottement du moteur à combustion interne.

12. Procédé selon l'une quelconque des revendications 7 à 11, comprenant en outre l'étape de lissage de la pression atmosphérique (PA) détectée par l'étape de détection,
dans lequel l'étape de correction effectue la correction en utilisant la pression atmosphérique lissée,
dans lequel l'étape de lissage est réalisé de telle sorte que la pression atmosphérique lissée utilisée par l'étape de correction dans un cycle courant n'a pas une différence supérieure ou égale à une valeur prédéterminée par rapport à la pression atmosphérique lissée utilisée par l'étape de correction dans un cycle précédent.

# Figure 1

Figure 2

# Figure 3

(a)

(b)

# Figure 4

Target intake manifold
pressure
(absolute pressure, mmHg)

Reference
gauge pressure

101、102

760

450

103

Target intake
air amount

Target lift amount
(mm)

113

112

111

L2

L1

Target intake
air amount

Requested intake
air amount
GALTHCMD

Corrected
requested intake
air amount
GALTHCMDF

Negative pressure
control region

Lift amount
control region

Figure 5

Operating state →

81 — Requested intake air amount determining part

Requested intake air amount: GALTHCMD

83 — Requested intake air amount correcting part

Corrected requested intake air amount: GALTHCMDF

84 — Target lift determining part

Target lift amount: ALCMD

85 — Lift amount controller

Manipulated variable → to Variable lift mechanism 32

82 — Target rotaional speed determining part

Target rotational speed: NOBJ

90 — Intake air amount map (Standard condition)

Figure 6

# Figure 7

```
┌─────────────────────────────┐
│ Determination of Target lift │
│ amount and Target intake     │
│ manifold pressure            │
└─────────────────────────────┘
              │
              ▼
┌─────────────────────────────┐  S1
│ Determine Requested intake air │
│ amount GALTHCMD             │
└─────────────────────────────┘
              │
              ▼
┌─────────────────────────────┐  S2
│ Correct Requested intake air │
│ amount to determine Corrected │
│ requested intake air amount  │
│ GALTHCMDF                   │
└─────────────────────────────┘
              │
              ▼
┌─────────────────────────────┐  S3
│ Determine Target             │
│ rotational speed NOBJ        │
└─────────────────────────────┘
              │
              ▼
┌─────────────────────────────┐  S4
│ Refer to Intake air amount map to │
│ determine Target lift amount │
└─────────────────────────────┘
              │
              ▼
┌─────────────────────────────┐  S5
│ Determine Target intake manifold │
│ pressure (gauge pressure)    │
└─────────────────────────────┘
              │
              ▼
┌─────────────────────────────┐  S6
│ Limit process                │
└─────────────────────────────┘
              │
              ▼
┌─────────────────────────────┐  S7
│ Determine Final target intake │
│ manifold pressure            │
│ (absolute pressure)          │
└─────────────────────────────┘
              │
              ▼
        ┌───────────┐
        │   EXIT    │
        └───────────┘
```

## Figure 8

Lift amount

132

131

First
gauge pressure:
PBGA1
(＝Reference
gauge pressure)

Second
gauge pressure:
PBGA2

Target lift amount
for search:
ALCMD_PA

Intake air
amount

Second intake
air amount
GAIR2

First intake
air amount
GAIR1

## Figure 9

14

16

S

TA, PB, $\rho$

GAIR
_CYL

V

PBGA＝PB－PA

Figure 10

```
    ┌─────────────────────────────┐
    │  Determination of Transition │
    │     intake air amount        │
    │       GAPBPARX               │
    └─────────────────────────────┘
                  │
                  ▼
┌───────────────────────────────────────────────────────┐
│     Select Map corresponding to Reference gauge pressure,        S11
│       Present rotational speed and First phase CAIN1 and
│ Refer to the Map based on Second lift amount ALCMD__STD for seach
│          to determine Corresponding intake air amount GA1
└───────────────────────────────────────────────────────┘
                  │
                  ▼
┌───────────────────────────────────────────────────────┐
│     Select Map corresponding to Reference gauge pressure,        S12
│      Present rotational speed and Second phase CAIN2 and
│ Refer to the Map based on Second lift amount ALCMD__STD for seach
│          to determine Corresponding intake air amount GA2
└───────────────────────────────────────────────────────┘
                  │
                  ▼
┌───────────────────────────────────────────────────────┐
│     Select Map corresponding to Reference gauge pressure,        S13
│       Present rotational speed and Third phase CAIN3 and
│                 Refer to the Map based on
│          Second lift amount ALCMD__STD for seach
│          to determine Corresponding intake air amount GA3
└───────────────────────────────────────────────────────┘
                  │
                  ▼
      ┌───────────────────────────────────────┐
      │ Interpolation calculation is applied to GA1~GA3   S14
      │ to determine Transition intake air amount GAPBPARX
      │          corresponding to Present phase
      └───────────────────────────────────────┘
                  │
                  ▼
            ┌──────────────┐
            │     EXIT     │
            └──────────────┘
```

# Figure 11

(a)

Lfit amount

142

143

CAIN2

CAIN3

141

CAIN1

Second lift amount
for search:
ALCMD_STD

Intake air
amount

GA3    GA2    GA1

(b)

Intake air
amount

GA1

GAPBPARX

GA2

GA3

Phase

CAIN1    CAIN2    CAIN3

CAIN

Figure 12

Figure 13

```
        ┌─────────────────────────┐
        │     Smoothing of        │
        │  Atmospheric pressure   │
        └─────────────────────────┘
                    │
                    ▼
┌─────────────────────────────────────────────────────┐      S31
│          difference DPAfilter=                        │    ╱
│ | Current value of Detected atmospheric pressure PA−  │
│ Previous value of Smoothed atmospheric pressure PAfilter | │
└─────────────────────────────────────────────────────┘
                    │
                    ▼
                   S32
              ╱─────────────╲
             ╱ difference DPAfilter is ╲        Yes
            ╱ greater than or equal to  ╲─────────────────┐
            ╲ Predetermined value C ?   ╱                 │
             ╲─────────────────────────╱                  │                S34
                    │                                      │              ╱
                    │ No                                   ▼
  S33               ▼                    ┌─────────────────────────────────────────────┐
   ╲    ┌────────────────────────┐      │ Current value of Smoothed atmospheric pressure PAfilter │
    ╲   │  Current value of Smoothed │  │ =Result of limiting Current value of Detected atmospheric │
        │ atmospheric pressure PAfilter= │ │              pressure PA                     │
        │  Current value of Detected │    │ Maximum value=Previous value of Smoothed atmospheric │
        │ atmospheric pressure PA    │    │      pressure PAfilter+Predetermined value D  │
        └────────────────────────┘      │ Minimum value =Previous value of Smoothed atmospheric │
                    │                     │      pressure PAfilter−Predetermined value D  │
                    │                     └─────────────────────────────────────────────┘
                    │                                      │
                    ▼◄─────────────────────────────────────┘
              ┌───────────┐
              │   EXIT    │
              └───────────┘
```

# Figure 14

# Figure 15

(a)

Rotational speed (rpm)
Throttle opening degree (deg)
Atmospheric pressure (mmHg)
Gauge pressure (mmHg)

larger

PA    PBGA

NE

TH

PBGA
PA

NE

221

225    TH

larger

Lift amount (mm)
Longitudinal G

前後G

LFT

223

t3

time

(b)

larger

Acceleration G

V1

0

V2

Amount of change in Atmospheric
pressure per Predetermined time
(mmHg)

smaller

(c)

100

80

Gradient (%)    55    60

40

20

0

V2

Amount of change in Atmospheric
pressure per Predetermined time
(mmHg)

EP 2 278 140 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3791267 B
- US 2008189026 A1
- EP 1947314 A1
- JP 2004036560 A
- JP 2000227033 A